# EUROPEAN PATENT APPLICATION

(11) **EP 3 547 266 A1**
(43) Date of publication of application: **02.10.2019**
(21) Application number: 19166226.1
(22) Date of filing: 29.03.2019
(51) Int. Cl.: G06T 17/00

(54) **IMPORTATION AND TRANSFORMATION TOOL FOR UTILIZING COMPUTER-AIDED DESIGN FILES IN A WEB BROWSER OR CUSTOMIZED CLIENT INTERFACE**

(30) Priority: 30.03.2018 US 201815942164; 19.03.2019 WO PCT/US2019/023035
(71) Applicant: First Insight, Inc., Warrendale, PA 15086 (US)
(72) Inventor: Petro, Gregory, Wexford, PA 15090 (US); Anandan, Mangal, Warrendale, PA 15086 (US); Burlando, Matthew, Canonsburg, PA 15317 (US)
(74) Representative: Betten & Resch

(57) **Abstract**

An importation and transformation tool is disclosed for importing a computer-aided design (CAD) file into a server, transforming the CAD file into another file format, such as an animation or one or more still images, displaying the transformed file on a client device using a web browser or customized interface, and receiving data from a user for purposes of evaluating the product embodied in the design.

## Description

### RELATED APPLICATION

This application claims the benefit of US Patent Application No. 15/942,164 filed on March 30, 2018.

### TECHNICAL FIELD

An importation and transformation tool is disclosed for importing a computer-aided design (CAD) file into a server, transforming the CAD file into another file format, such as an animation or one or more still images, displaying the transformed file on a client device using a web browser or customized interface, and receiving data from a user for purposes of evaluating the product embodied in the design.

### BACKGROUND OF THE INVENTION

The prior art includes many mechanisms for generating content within a web browser or customized interface on a client device and for receiving feedback from the client device regarding the content. The prior art also includes CAD generation programs used by fashion designers, engineers, architects, and others. These CAD generation programs typically output a special CAD file. Special software typically is required to view a CAD file.

What is lacking in the prior art is a mechanism for utilizing CAD files in a web browser or customized application on an ordinary client device that does not contain the special CAD software.

What is further lacking is the ability to transform a CAD file into another file format that does not require the special CAD software and/or that requires less processing power or memory or that consumes less power.

### SUMMARY OF THE INVENTION

An importation and transformation tool is disclosed for importing a computer-aided design (CAD) file into a server, transforming the CAD file into another file format, such as an animation or one or more still images, displaying the transformed file on a client device using a web browser or customized interface, and receiving data from a user for purposes of evaluating the product embodied in the design.

### BRIEF DESCRIPTION OF THE DRAWINGS

Figure 1 depicts hardware components of a client device.
Figure 2 depicts software components of the client device.
Figure 3 depicts hardware components of a server.
Figure 4 depicts software components of the server.
Figure 5 depicts two exemplary client devices in communication with the server.
Figure 6 depicts the importation of a CAD file into the server from a client device.
Figure 7 depicts the transformation of the CAD file into a different file format that can be utilized by a web server or customized server application.
Figure 8 depicts the display of a 3D model on a client device using data generated by the server from the CAD file.
Figure 9 depicts the display of one or more images on a client device using data generated by the server from the CAD file.
Figure 10 depicts an augmented reality (AR) environment on a client device, in which a live view through a capture unit is displayed on the display of the client device, and an image is superimposed on the live view using a customized client application.
Figure 11 depicts an example of an implementation of the embodiments described above.
Figure 12 depicts the generation of a report by the server provided to a client device based on feedback obtained from the client device and/or other client devices.

### DETAILED DESCRIPTIONS OF THE PREFERRED EMBODIMENTS

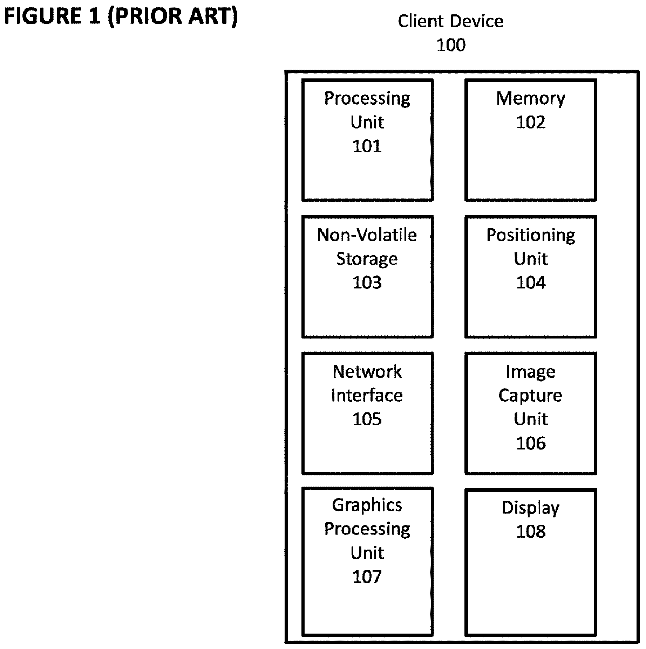

Figure 1 depicts hardware components of client device 100. These hardware components are known in the prior art. Client device 100 is a computing device that comprises processing unit 101, memory 102, non-volatile storage 103, positioning unit 104, network interface 105, image capture unit 106, graphics processing unit 107, and display 108. Client device 100 can be a smartphone, notebook computer, tablet, desktop computer, gaming unit, wearable computing device such as a watch or glasses, or any other computing device.

Processing unit 101 optionally comprises a microprocessor with one or more processing cores. Memory 102 optionally comprises DRAM or SRAM volatile memory. Non-volatile storage 103 optionally comprises a hard disk drive or flash memory array. Positioning unit 104 optionally comprises a GPS unit or GNSS unit that communicates with GPS or GNSS satellites to determine latitude and longitude coordinates for client device 100, usually output as latitude data and longitude data. Network interface 105 optionally comprises a wired interface (e.g., Ethernet interface) or wireless interface (e.g., 3G, 4G, GSM, 802.11, protocol known by the trademark "Bluetooth," etc.). Image capture unit 106 optionally comprises one or more standard cameras (as is currently found on most smartphones and notebook computers). Graphics processing unit 107 optionally comprises a controller or processor for generating graphics for display. Display 108 displays the graphics generated by graphics processing unit 107, and optionally comprises a monitor, touchscreen, or other type of display.

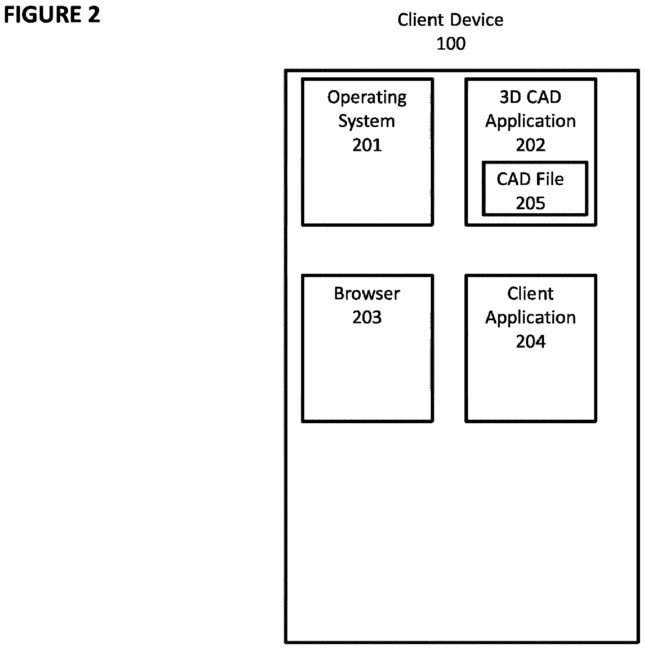

Figure 2 depicts software components of client device 100. Client device 100 comprises operating system 201 (such as the operating systems known by the trademarks "Windows," "Linux," "Android," "iOS," or others), 3D CAD application 202, browser 203, and client application 204. 3D CAD application 202 is an application for generating and/or displaying CAD files, such as exemplary CAD file 205. Examples of 3D CAD application 202 include the CAD applications offered by Optitex, AutoDesk, and other known companies. Browser 203 is a web browsing application, such as the browsers known by the trademarks "Internet Explorer," "Chrome," and "Safari."

Client application 204 comprises lines of software code executed by processing unit 101 and/or graphics processing unit 107 to perform the functions described below. For example, client device 100 can be a smartphone sold with the trademark "Galaxy" by Samsung or "iPhone" by Apple, and client application 204 can be a downloadable app installed on the smartphone or a browser running code obtained from server 300 (described below). Client device 100 also can be a notebook computer, desktop computer, game system, or other computing device, and client application 204 can be a software application running on client device 100. Client application 204 forms an important component of the inventive aspect of the embodiments described herein, and client application 204 is not known in the prior art.

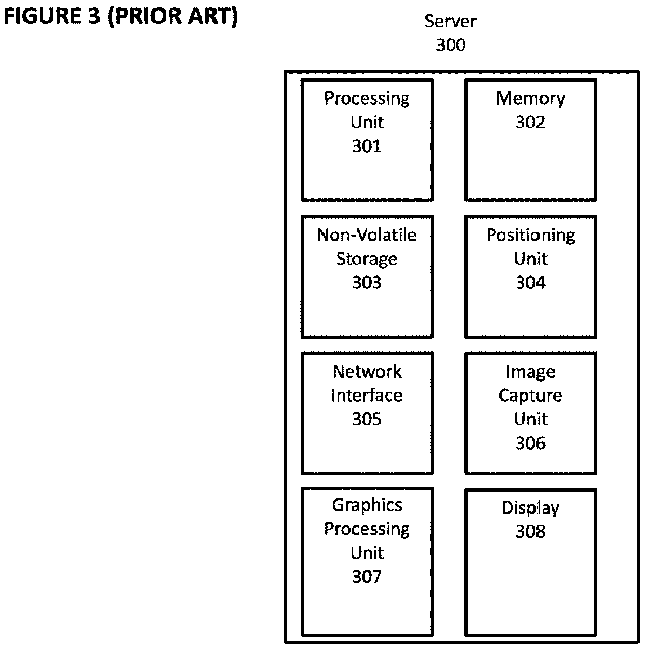

Figure 3 depicts hardware components of server 300. These hardware components are known in the prior art and are similar or identical to the hardware components of client device 100. Server 300 is a computing device that comprises processing unit 301, memory 302, non-volatile storage 303, positioning unit 304, network interface 305, image capture unit 306, graphics processing unit 307, and display 308.

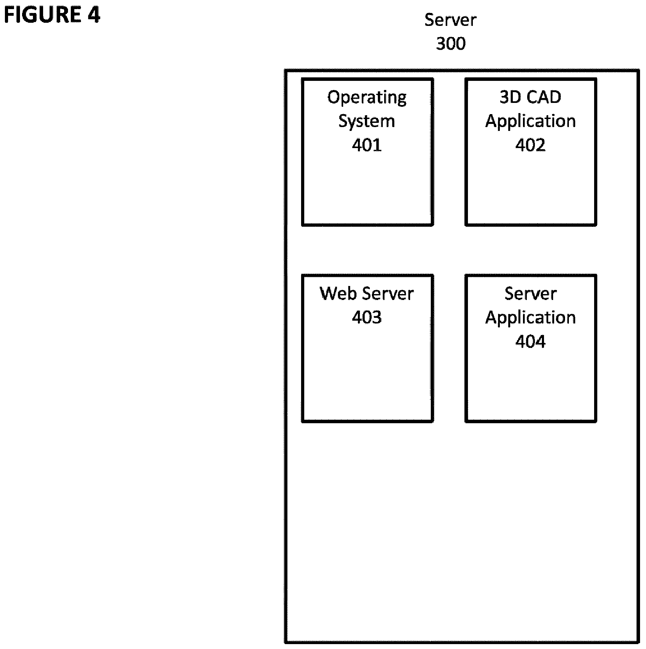

Figure 4 depicts software components of server 300. Server 300 comprises operating system 401 (such as the operating systems known by the trademarks "Windows," "Linux," "Android," "iOS," or others), 3D CAD application 402, web server 403, and server application 404. As with 3D CAD application 202, 3D CAD application 402 is an application for generating and/or displaying CAD files, such as exemplary CAD file 205. Examples of 3D CAD application 402 include the CAD applications offered by Optitex, AutoDesk, and other known companies. Web server 403 is a web page generation program capable of interacting with browser 203 on client device 100 to display web pages, such as the web server known by the trademark "Apache."

Server application 404 comprises lines of software code executed by processing unit 301 and/or graphics processing unit 307 to interact with client application 204 perform the functions described below.

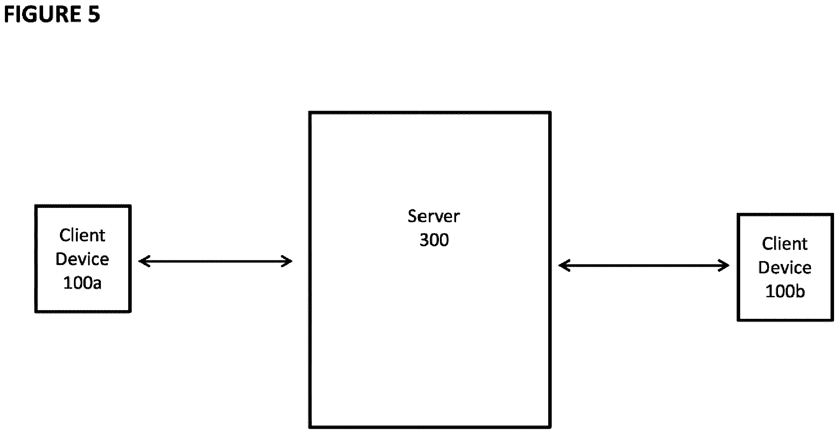

With reference to Figure 5, two instantiations of client device 100 are shown, client devices 100a and 100b. These are exemplary devices, and it is to be understood that any number of different instantiations of client device 100 can be used. Client devices 100a and 100b each communicate with server 300 using network interface 105.

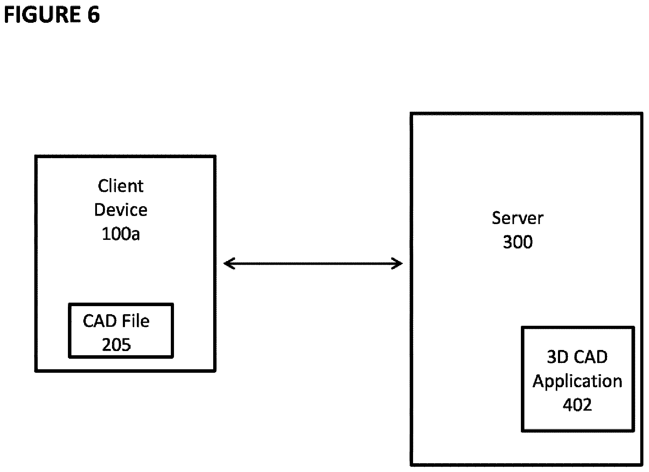

In Figure 6, a user generates or loads CAD file 205 using 3D CAD application 202 on client device 100a. CAD file 205 might comprise, for example, 3D design drawings for clothing items, furniture, a building, a mechanical device, or any other type of physical structure. Server 300 obtains CAD file 205 from client device 100a and is able to process CAD file 205 using 3D CAD application 402.

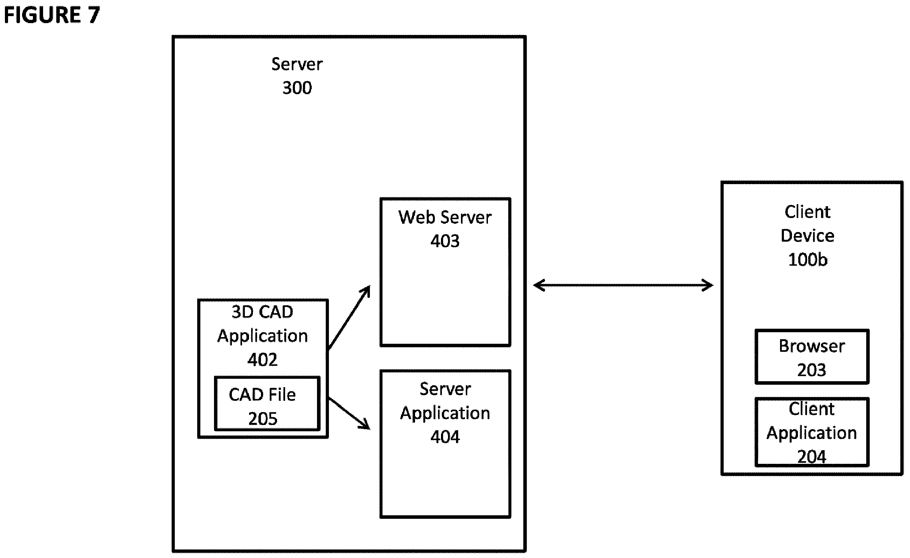

In Figure 7, 3D CAD application 402, web server 403, and/or server application 404 transform CAD file 205 into another file format, such as an animated GIF file, an MPEG video file, one or more JPEG images, one or more pdf files, a 3D model, or other known file formats. The transformed data can be transmitted by server 300 using web server 403 or server application 404 to client device 100b, where it can be utilized by browser 203 and/or client application 204.

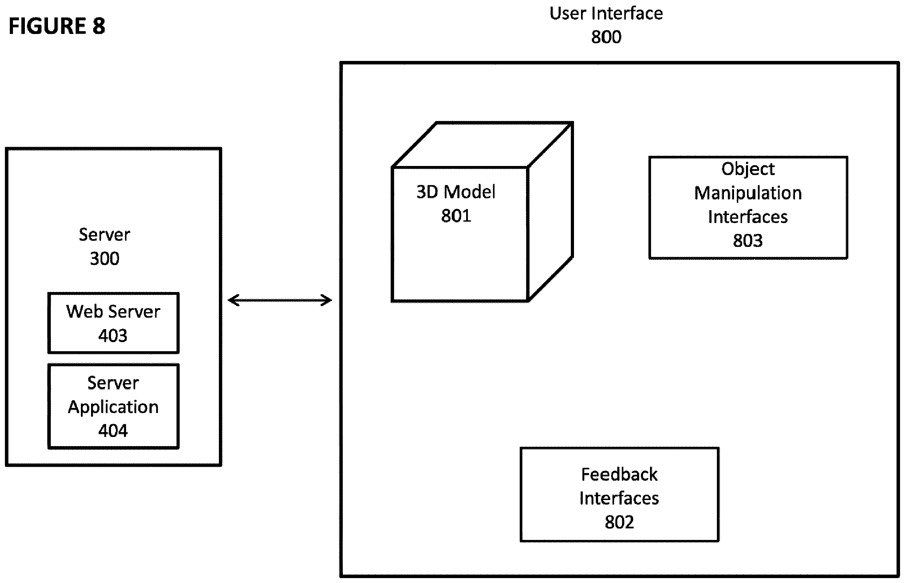

An embodiment is shown in Figure 8. In Figure 8, server 300 transmits 3D model 801 (which can be a static or animated 3D model) to client device 100b. An example of a 3D model 801 that is animated is a GIF file or MPEG video file. Client device 100b then displays 3D model 801 in user interface 800, which can be a web page displayed by browser 203 or a user interface displayed by client application 204 on display 108 of client device 100b.

User interface 800 provides the user with object manipulation interfaces 803, which allow the user to manipulate 3D model 801, such as interfaces allowing the user to zoom in or out of the animation, to start or stop the animation, to change the angle of view of the animation, or other alterations.

User interface 800 also provides the user with feedback interfaces 802 to allow the user to provide feedback on 3D model 801. In one embodiment, the purpose of user interface 800 is to obtain feedback from the user to evaluate, through predictive analytics, the fitness of the product embodied in 3D model 801 for the market. Thus, a product designer can obtain feedback on a 3D CAD design before he or she manufactures an actual product. For example, in this embodiment, feedback interfaces 802 might provide mechanisms by which the user can indicate how much he or she likes the item displayed in 3D model 801, how much he or she thinks someone would be willing to pay to purchase the item, or to provide other feedback, including qualitative feedback, regarding the item.

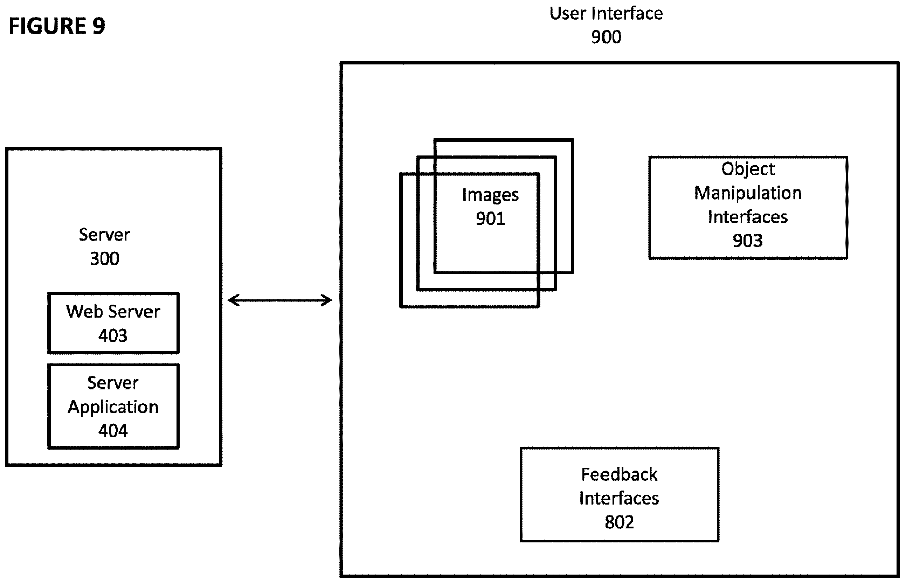

Another embodiment is shown in Figure 9. In Figure 9, server 300 transmits one or more images 901 (such as a JPEG images or pdf images) to client device 100b. Client device 100b then displays images 901 in user interface 900, which can be a web page displayed by browser 203 or a user interface displayed by client application 204 on display 108 of client device 100b.

User interface 900 provides the user with object manipulation interfaces 903, which allow the user to manipulate images 901, such as interfaces allowing the user to zoom in or out of the images, to move from image to image within images 901, or other manipulations.

As with user interface 800, user interface 900 also provides the user with feedback interfaces 802.

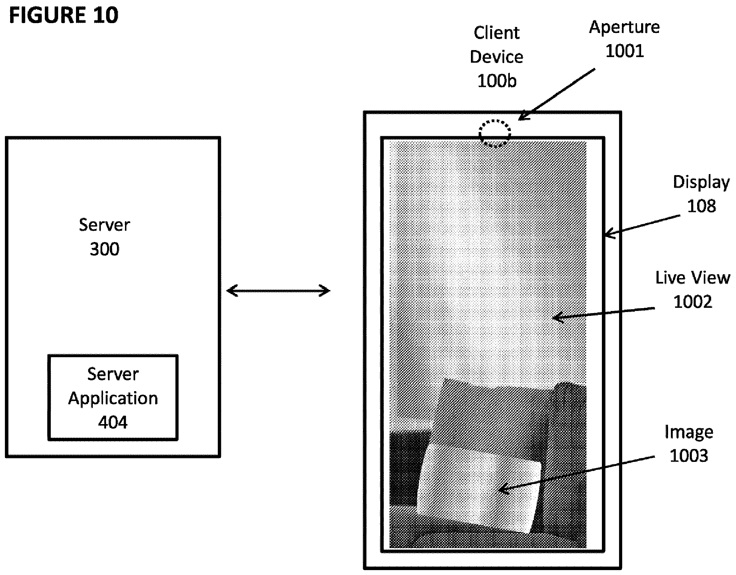

Figure 10 depicts an augmented reality (AR) embodiment. Client device 100b captures live view 1002 using image capture unit 106 and displays live view 1002 on display 108. Here aperture 1001 of image capture unit 106 is on a side of client device 100b not shown and captures the image displayed as live view 1002, which in this example is a sofa in a living room.

Client application 204 generates image 1003 and superimposes image 1003 on live view 1002. In this example, image 1003 is an image of a pillow that the user is evaluating for use on the sofa shown in live view 1002. Thus, the AR environment allows the user to see how the item shown in image 1003 would actually look on the sofa shown in live view 1002.

As with user interfaces 800 and 900, the user can provide feedback using feedback interfaces 802, which are not shown. Feedback interfaces 802 can be superimposed on live view 1002, or they can be provided on a separate screen once the user exits live view 1002.

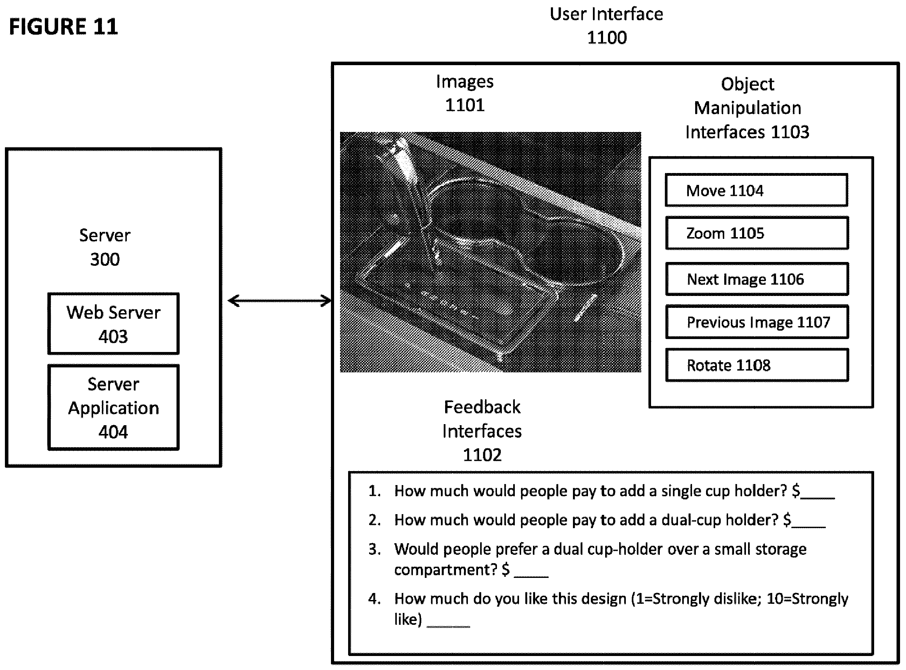

Figure 11 depicts an example of an implementation of the embodiments described above. In this example, user interface 1100 depicts images of a car interior design. Here, image 1101 depicts a proposed dual-cup holder design. Object manipulation interfaces 1103 provide interfaces to allow a user to move within the image (1104), to zoom in or out (1105), to move to the next image (1106), to move to the previous image (1107), or to rotate the axis of view (1108). These are merely exemplary, and one of ordinary skill in the art would understand that additional interfaces are possible.

Feedback interfaces 1102 solicit feedback from the use about image 1101. In this example, the user is able to type in text boxes in response to the following questions:
- How much would people pay to add a single cup holder? $_
- How much would people pay to add a dual-cup holder? $_
- Would people prefer a dual cup-holder over a small storage compartment? $_
- How much do you like this design (1=Strongly dislike; 10=Strongly like)_

Feedback interfaces 1102 can receive the data from feedback interfaces 1102 and perform predictive analytics on the received data from all users who provided input on the same design. In the example of Figure 11, images are shown, but it is to be understood that the same configuration and mechanisms can be used for 3D models or other representations of the 3D CAD design.

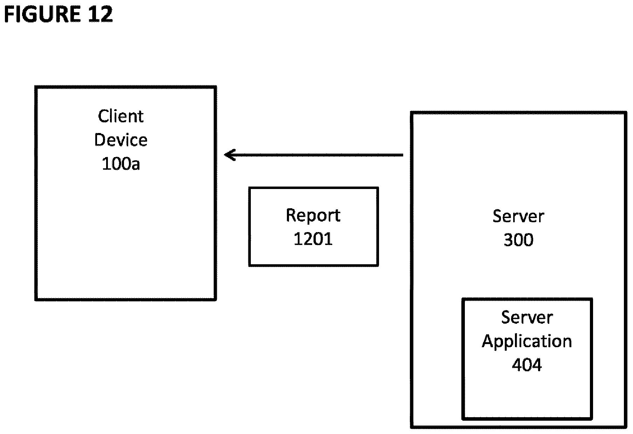

With reference to Figure 12, server 300 gathers data from client devices 100 that are captured by feedback interfaces such as feedback interfaces 802 and 1102. Server 300 then generates and sends report 1201 to client device 100a or another client device regarding the data. In the embodiment where feedback interfaces 802 provide a mechanism by which users can indicate how much they like the item displayed, how much they would be willing to pay to purchase the item, or to provide other feedback regarding the item, report 1201 might indicate, for example, the average score among all users of how much they liked the item or the average price or ranges of prices that the users would be willing to pay for the item.

References to the present invention herein are not intended to limit the scope of any claim or claim term, but instead merely make reference to one or more features that may be covered by one or more of the claims. Materials, processes and numerical examples described above are exemplary only, and should not be deemed to limit the claims. It should be noted that, as used herein, the terms "over" and "on" both inclusively include "directly on" (no intermediate materials, elements or space disposed there between) and "indirectly on" (intermediate materials, elements or space disposed there between). Likewise, the term "adjacent" includes "directly adjacent" (no intermediate materials, elements or space disposed there between) and "indirectly adjacent" (intermediate materials, elements or space disposed there between). For example, forming an element "over a substrate" can include forming the element directly on the substrate with no intermediate materials/elements there between, as well as forming the element indirectly on the substrate with one or more intermediate materials/elements there between.

## Claims

1. A method of transforming a three-dimensional computer-aided design file into an animation file and displaying the animation file, comprising:
obtaining, by a server over a network interface, the three-dimensional computer-aided design file generated using a first computer program;
transforming, by a processor in the server, the three-dimensional computer-aided design file into an animation file;
displaying, by a client device, an animation from the animation file using a second computer program; and
providing, on the client device, interfaces to enable a user to manipulate the animation.

2. The method of claim 1, wherein the animation file is a GIF file.

3. The method of claim 1, wherein the animation file is an MPEG file.

4. The method of claim 1, wherein the client device is a mobile device.

5. A method of transforming a three-dimensional computer-aided design file into one or more image files and displaying one or more images from the one or more image files, comprising:
obtaining, by a server over a network interface, the three-dimensional computer-aided design file generated using a first computer program;
transforming, by a processor in the server, the three-dimensional computer-aided design file into one or more images files;
displaying, by a client device, one or more images from the one or more image files using a second computer program; and
providing, on the client device, interfaces to enable a user to manipulate the one or more images.

6. The method of claim 1 or 5, further comprising:
providing, on the client device, interfaces to enable a user to input feedback data.

7. The method of claim 6, further comprising:
generating a report, by the server, using the feedback data.

8. The method of claim 1 or 5, wherein the second computer program comprises a web browser.

9. A method of transforming a three-dimensional computer-aided design file into one or more image files and displaying one or more images from the one or more image files in an augmented reality display, comprising:
obtaining, by a server over a network interface, the three-dimensional computer-aided design file generated using a first computer program;
transforming, by a processor in the server, the three-dimensional computer-aided design file into one or more image files;
displaying, by a client device, a live view captured by an image capture unit;
superimposing, by the client device, one or more images from the one or more image files on the live view using a second computer program; and
providing, on the client device, interfaces to enable a user to manipulate the one or more images.

10. The method of claim 5 or 9, wherein the one or more image files are JPEG files.

11. The method of claim 5 or 9, wherein the one or more image files are pdf files.

12. The method of claim 5 or 9, wherein the client device is a mobile device.

13. The method of claim 9, further comprising:
providing, on the client device, interfaces to enable a user to input feedback data.

14. The method of claim 13, further comprising:
generating a report, by the server, using the feedback data.

15. The method of one of claims 1, 5 or 9, wherein the second computer program comprises a client application.
